# EUROPÄISCHE PATENTSCHRIFT

(11) **EP 3 664 910 B1**
(45) Veröffentlichungstag und Bekanntmachung des Hinweises auf die Patenterteilung: **07.07.2021**
(21) Anmeldenummer: 18733213.5
(22) Anmeldetag: 15.06.2018
(51) Int. Cl.: B01D 33/23

(54) **SCHEIBENFILTER**
DISC FILTER
FILTRE À DISQUES

(30) Priorität: 09.08.2017 DE 102017118050
(43) Veröffentlichungstag der Anmeldung: 17.06.2020
(73) Patentinhaber: Voith Patent GmbH, 89522 Heidenheim (DE)
(72) Erfinder: GOMMEL, Axel, 88214 Ravensburg (DE); NUSSBAUMER, Markus, 88212 Ravensburg (DE)
(86) Internationale Anmeldenummer: PCT/EP2018/065916
(87) Internationale Veröffentlichungsnummer: WO 2019/029874

(56) Entgegenhaltungen:
- WO-A1-03/051487
- DE-U1-202011 110 505
- DE-U1-202015 000 656
- US-A1- 2010 032 364

## Beschreibung

Die Erfindung betrifft ein Filterelement eines rotierenden Scheibenfilters zur Abtrennung von Flüssigkeiten aus einer Suspension, insbesondere einer Faserstoffsuspension, dessen von einer oder mehreren, perforierten und profilierten Filterplatten begrenzter Innenraum mit einer Unterdruckquelle in Verbindung steht, wobei wenigstens eine Filterplatte ein Wellenprofil aufweist.

Derartige Scheibenfilter werden zur Eindickung der Suspension und in der Papierindustrie insbesondere zur Faserstoffrückgewinnung eingesetzt und beispielsweise in der EP 2678087 A1 sowie der DE 20 2011 110 505 U1 beschrieben.

Weitere Scheibenfilter sind in der DE 20 2015 000 656 U1 und der WO 03/051487 A1 offenbart.

Hierzu ist die Hohlwelle in der Regel mit einer Unterdruckquelle verbunden. Auf den Filterscheiben bildet sich infolge des Druckunterschieds zwischen der Faserstoffsuspension und dem Innenraum der Filterscheiben eine Vliesschicht. Beim Eintauchen der Filterscheiben in die Faserstoffsuspension gelangt so weitestgehend nur Wasser in den Innenraum der Filterscheiben und damit die Hohlwelle.

Die Vliesschicht wird beim Auftauchen meist über Schaber entfernt und zum entsprechenden Stoffauslauf geführt oder mit Wasser in den Stoffauslauf gespritzt.

Das Wellenprofil sorgt für eine Vergrößerung der für die Entwässerung zur Verfügung stehenden Oberfläche.

Die Aufgabe der Erfindung ist es die Effizienz des Scheibenfilters mit möglichst geringem Aufwand und bei sicherer Ablösung der Vliesschicht zu verbessern.

Erfindungsgemäß wurde die Aufgabe dadurch gelöst, dass beim Wellenprofil die Täler breiter als die Berge sind.

Die Breite der Täler und Berge wird dabei über die Mittellinie bestimmt, welche durch die Mitte der Strecke zwischen Bergkamm und Talsohle des Wellenprofils verläuft.

Die schmaleren Wellenberge führen bei gleicher Höhe des Wellenbergs zu steileren Flanken und ermöglichen eine Erhöhung der Anzahl von Wellenbergen, was eine Steigerung der Entwässerungsoberfläche und damit auch der Entwässerungsleistung ermöglicht.
Die relativ breiten Täler erleichtern das Ablösen der Vliesschicht aus denselben. Erleichtert wird dies auch noch dadurch, dass das Wachstum der Vliesschicht senkrecht zur Plattenoberfläche erfolgt und sich so in den breiteren Tälern mehr Gewicht an Vliesschicht ansammelt. Dabei ist es vorteilhaft, wenn die Täler um 50 bis 400%, insbesondere um 100 bis 300% breiter als die Berge des Wellenprofils sind. Die Bergkämme und Talsohlen des Wellenprofils müssen nicht geradlinig verlaufen. Genauso wenig müssen alle Abschnitte des Wellenprofils eine Krümmung besitzen.

Um die Entwässerungsoberfläche darüber hinaus zu vergrößern, ist es vorteilhaft, wenn die Täler vom Innenraum wegweisende Erhebungen besitzen. Damit dies nicht das Ablöseverhalten der Vliesschicht beeinträchtigt, sollten diese Erhebungen unterhalb der Bergkämme des Wellenprofils enden.
Untersuchungen haben ergeben, dass die Höhe der Erhebungen über der Talsohle mit Vorteil im Bereich zwischen 20 und 70% der Strecke zwischen dem Bergkamm und der benachbarten Talsohle des Wellenprofils liegen sollte.
Wegen ihrer Auswirkung auf die zur Verfügung stehende Entwässerungsfläche genügt es, wenn sich die Erhebungen ausschließlich im perforierten Bereich der Filterplatte befinden.
Die Filterplatten lassen sich mittels Zugdruckumformen eines Blechs, auch Tiefziehen genannt, problemlos und kostengünstig herstellen.
Die Höhe der Erhebungen sollte hierbei unabhängig von der Ausführungsform zwischen 2 und 40 mm, vorzugsweise zwischen 4 und 20 mm liegen.

Für das Ablöseverhalten der Vliesschicht ist es vorteilhaft, wenn die Erhebungen parallel zur Oberfläche der Filterplatte betrachtet einen runden oder länglichen Querschnitt aufweisen.

Alternativ oder ergänzend können die Erhebungen allerdings ebenso wellenförmig ausgebildet sein, wobei die Wellenberge der Erhebungen vorzugsweise parallel zu den Bergen des Wellenprofils der Filterplatte verlaufen.
Hinsichtlich der Wirkung auf die Entwässerungsleistung einerseits und die Ablösbarkeit der Vliesschicht andererseits ist es von Vorteil, wenn zwischen zwei Bergen des Wellenprofils höchstens zwei, vorzugsweise nur eine wellenförmige Erhebung vorhanden ist. Zur umfassenden Nutzung dieser Vorteile sollten sich die wellenförmigen Erhebungen auch über das gesamte Wellenprofils der Filterplatte erstrecken.

Falls die Wellenkämme des Wellenprofils der Filterplatte nicht linear verlaufen, so kann damit die Filteroberfläche noch weiter vergrößert werden.

Auf der anderen Seite erleichtert ein linearer Verlauf der Wellenkämme die Bildung von Strömungskanälen im Innenraum des Filterelementes in Richtung Unterdruckquelle.

Außerdem kann es vorteilhaft sein den Verlauf des Wellenprofils einer Filterplatte abschnittsweise zu variieren. So kann beispielsweise über eine Variation des Verlaufs des Wellenprofils einer Filterplatte insbesondere hinsichtlich Frequenz und Amplitude der Welle die Entwässerungskapazität der Filterplatte spezifisch beeinflusst werden.

Für die Anwendung in Scheibenfiltern zur Behandlung von Faserstoffsuspensionen sollte das Filterelement kreissektorförmig ausgebildet und vorzugsweise auf einer, mit der Unterdruckquelle verbundenen Hohlwelle befestigt sein. Dabei bilden mehrere Filterelemente die kreisförmige Filterscheibe.

Zur Realisierung einer sicheren und einfachen Verbindung zwischen der Hohlwelle bzw. einem Kanal in der Hohlwelle und dem Innenraum der daran befestigten Filterelemente sollte die Hohlwelle an der Außenfläche mehrere Öffnungen besitzen, wobei vorzugsweise jedem Filterelement eine separate Öffnung zugeordnet ist.

Um den Abfluss des Filtrats zu erleichtern, sollten die Fußteile der Filterelemente keine Perforation aufweisen.

Besonders einfach gestaltet sich die Herstellung der Filterelemente, wenn zwei den Innenraum des Filterelementes begrenzende Filterplatten an den Enden formschlüssig miteinander verbunden werden.

Für eine umfassende Nutzung der Vorteile sollten zwei gegenüberliegende, den Innenraum des Filterelementes begrenzende Filterplatten ein Wellenprofil mit Erhebungen in den Tälern besitzen.

Im Interesse einer hohen Stabilität des Filterelementes ist es vorteilhaft, wenn die Wellen des Wellenprofils zweier gegenüberliegender Filterplatten des Filterelementes zueinander geneigt verlaufen.

Jedoch gestaltet sich die Bildung von Strömungskanälen im Innenraum des Filterelementes zur Unterdruckquelle hin einfacher, wenn die Wellen des Wellenprofils zweier gegenüberliegender Filterplatten des Filterelementes parallel zueinander verlaufen.

Dabei ergeben sich mehrere große Strömungskanäle, wenn die Wellenberge des Wellenprofils der Außenseite einer Filterplatte jeweils den Wellenbergen des Wellenprofils der Außenseite der anderen Filterplatte des Filterelementes gegenüberliegen.

Nachfolgend soll die Erfindung an mehreren Ausführungsbeispielen näher erläutert werden.
In der beigefügten Zeichnung zeigt:
Figur 1: einen schematischen Querschnitt durch einen Scheibenfilter;
Figur 2: eine Teildraufsicht auf den Scheibenfilter ;
Figur 3: eine längliche Erhebung 7;
Figur 4: einen Querschnitt durch eine Filterplatte 3;
Figur 5: zwei gewellte Filterplatten 3 eines Filterelementes 1 mit parallelen Wellen und Figur 6: eine ähnliche Ausführung mit länglichen Erhebungen 7.

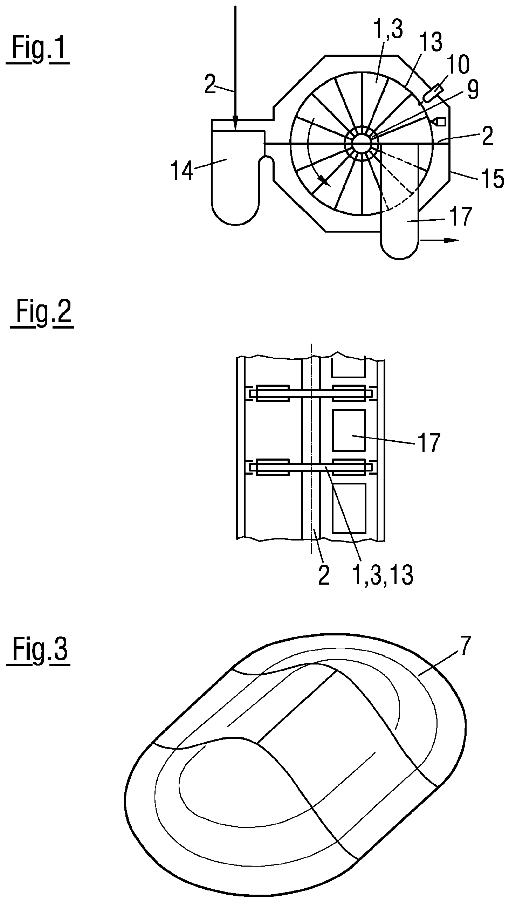

Die Faserstoffsuspension 2 wird gemäß Figur 1 über einen Einlauf 14 in den Behälter 15 des Scheibenfilters geleitet. Im Behälter 15 befindet sich eine horizontal verlaufende und rotierbar gelagerte Hohlwelle 9 mit mehreren senkrechten und axial voneinander beabstandeten Filterscheiben 13.

Die Filterscheiben 13 werden jeweils von mehreren kreisringsektorförmigen Filterelementen 1 gebildet, die über je einen Sektorfuß mit der Hohlwelle 9 verbunden sind.

Zur Senkung des Herstellungsaufwandes besteht die Hohlwelle 9 aus mehreren, sich in axialer Richtung erstreckenden und in Umfangsrichtung nebeneinander angeordneten Modulen.

Die Filterelemente 1 besitzen einen Innenraum 4, der über eine separate Öffnung der Hohlwelle 9 mit einem Kanal in derselben zur Fluidführung in Verbindung steht. Der Innenraum 4 der Filterelemente 1 wird von zwei perforierten und axial voneinander beabstandeten Filterplatten 3 begrenzt.
Dabei weisen die Filterplatten 3 in dem zur Hohlwelle 9 führenden Endbereich mit dem Sektorfuß keine Perforation auf.

Um das Wasser aus der Suspension 2 abziehen zu können, steht die mit einer Unterdruckquelle verbundene Hohlwelle 9 mit dem Innenraum 4 der Filterelemente 1 in Verbindung.
Die sich dabei an der Außenseite der Filterelemente 1, konkret am perforierten Bereich der Filterplatten 3 bildende Vliesschicht 16 wird nach dem Auftauchen aus der Suspension 2 in den Stoffauslauf 17 befördert.
Hierzu befinden sich die Stoffausläufe 17 gemäß Figur 2 jeweils zwischen zwei benachbarten Filterscheiben 13. Die Entfernung der Vliesschicht 16 vom entsprechenden Filtersektor erfolgt mittels einer, jeder Filterscheibe 13 zugeordneten Ablösevorrichtung 10, welche einen oder mehrere Wasserstrahlen auf die entsprechende Filterplatte 3 richtet.

Die von den, von der Perforation zurückgehaltenen Fasern gebildete Vliesschicht 16 ist auf der Filterplatte 3 unterschiedlich stark ausgebildet. Im Wesentlichen hängt das Dickenprofil der Vliesschicht 16 von der Oberflächenform der Filterplatte 3 ab.

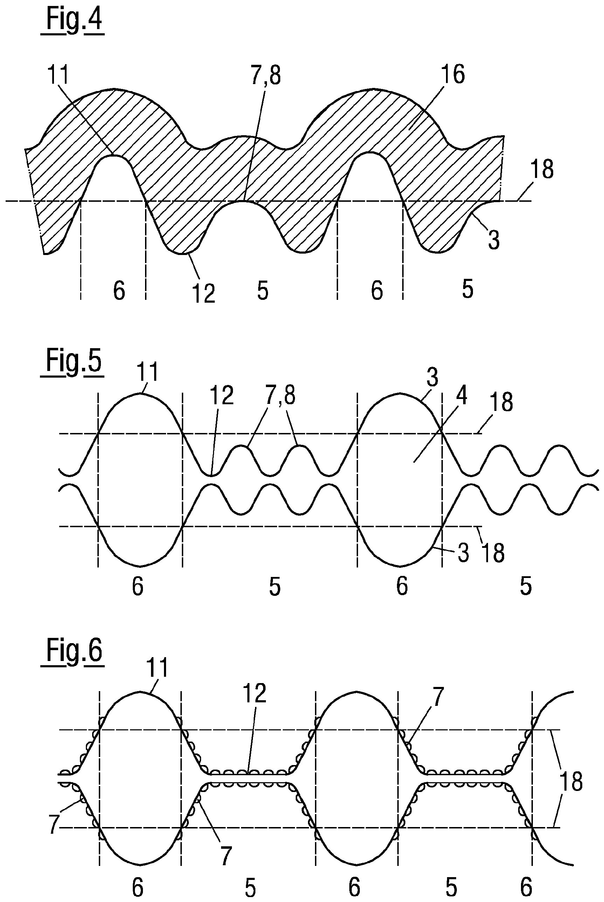

Zur Gewährleistung einer effizienten Entwässerung wird bei den Filterplatten 3 eine große perforierte Oberfläche angestrebt, was bei den Ausführungen durch ein Wellenprofil der Filterplatten 3 erreicht wird.
Hinzu kommt, dass beim perforierten Wellenprofil die Täler 5 breiter, insbesondere, wie angedeutet, um 100 bis 300% breiter als die Berge 6 sind. Dadurch gelingt entsprechend Figur 4 eine Vergleichmäßigung bei Dicke der Vliesschicht 16, was deren Ablösung von der Filterplatte 3 ohne die Gefahr eines Abreißens erleichtert.
Über die steileren Flanken der Berge 6 können so auch mehr Wellen pro Entwässerungsfläche der Filterplatte 3 untergebracht werden.

Die Breite der Berge 6 und Täler 5 wird auf der Mittellinie 18 gemessen, welche jeweils durch die Mitte der Strecke zwischen einem Bergkamm 11 und einer benachbarten Talsohle 12 verläuft.

Zwecks Vergrößerung der wirksamen Filteroberfläche weisen die Filterplatten 3, wie in den Figuren 4 bis 6 zu erkennen, auf der vom Innenraum 4 wegweisenden Außenseite im perforierten Bereich zumindest der Täler 5 des Wellenprofils mehrere oder gar eine Vielzahl an Erhebungen 7 auf.

Die Erhebungen 7 können parallel zur Oberfläche der Filterplatte 3 einen runden oder entsprechend Figur 3 einen länglichen Querschnitt aufweisen und sind mit Vorteil, wie in Figur 6 dargestellt, in einer Vielzahl insbesondere über die Täler 5 des Wellenprofils der Filterplatte 3 verteilt angeordnet.
Die runde Außenkontur der Erhebungen 7 verhindert dabei einen zu großen Abrieb derselben im Betrieb.

Um die Erhebungen 7 besser an die spezifischen Gegebenheiten des Filterelementes 1 anpassen zu können, kann es ebenso vorteilhaft sein, auf der Außenseite eine Vielzahl von Erhebungen 7 unterschiedlicher Form und/oder Größe vorzusehen.

Für eine optimale Gestaltung des Dickenprofils der Vliesschicht 16 sollten die Erhebungen 7 allerdings, wie in Figur 4 und 5 gezeigt, wellenförmig ausgebildet sein, wobei die Wellenberge 8 der Erhebungen 7 hier parallel zu den Bergen 6 des Wellenprofils der Filterplatte 3 verlaufen.
Aus gleichem Grund sollten zwischen zwei Bergen 6 des Wellenprofils aber auch nur zwei - wie in Figur 5 - oder nur eine wellenförmige Erhebung 7,8 - wie in Figur 4 - vorhanden sein.
Zur umfassenden Nutzung ihrer Vorteile erstrecken sich die wellenförmigen Erhebungen 7,8 über das gesamte Wellenprofils der Filterplatte 3.

Unabhängig von der Gestaltung der Erhebungen 7 erstrecken sich diese ausgehend von der Talsohle 12 im Interesse einer guten und sicheren Ablösbarkeit der Vliesschicht 16 nur über 20 und 70% der Strecke zwischen dem Bergkamm 11 und der benachbarten Talsohle 12 des Wellenprofils.

Da die Filterplatten 3 in der Regel von einem, vorzugsweise tiefgezogenen Blech gebildet werden, bilden die Erhebungen 7 gleichzeitig auch eine Erweiterung des Innenraums 4.
Dabei ist es besonders vorteilhaft, die Filterplatten 3 mit dem Sektorfuß einstückig auszuführen und/oder die beiden, den Innenraum 4 des Filterelementes 1 begrenzenden Filterplatten 3 am Außenumfang formschlüssig, beispielsweise mittels Falzen oder Clinchen miteinander zu verbunden.

Zwecks umfassender Nutzung der Erfindungsvorteile haben bei Figur 5 und 6 die beiden gegenüberliegenden, den Innenraum 4 begrenzenden Filterplatten 3 des Filterelementes 1 einen wellenförmigen Querschnitt mit Erhebungen 7 zumindest in den Tälern 5 der Außenseite des Wellenprofils.

Die Wellen des Wellenprofils verlaufen hier beispielhaft linear und bezüglich der gegenüberliegenden Filterplatten 3 auch parallel zueinander. Außerdem liegen - entsprechend Figur 5 und 6 - die Berge 6 des Wellenprofils der Außenseite einer Filterplatte 3 jeweils den Bergen 6 des Wellenprofils der Außenseite der anderen Filterplatte 3 des Filterelementes 1 gegenüber, so dass je einen Strömungskanal zwischen den jeweils gegenüberliegenden Bergen 6 des Wellenprofils und den Wellenbergen 8 der Erhebungen 7 entsteht.

Die Berge 6 und Täler 5 des Wellenprofils der Filterplatten 3 verlaufen parallel oder maximal 45° zur Radialen der Filterscheibe 13 geneigt.
Dabei kann der Verlauf des Wellenprofils einer Filterplatte 3 auch abschnittsweise variieren.

## Patentansprüche

1. Filterelement (1) eines rotierenden Scheibenfilters zur Abtrennung von Flüssigkeiten aus einer Suspension (2), insbesondere einer Faserstoffsuspension, dessen von einer oder mehreren, perforierten und profilierten Filterplatten (3) begrenzter Innenraum (4) mit einer Unterdruckquelle in Verbindung steht, wobei wenigstens eine Filterplatte (3) ein Wellenprofil aufweist, **dadurch gekennzeichnet, dass** beim Wellenprofil die Täler (5) breiter als die Berge (6) sind, wobei die Breite der Täler (5) und Berge (6) über die Mittellinie (18) bestimmt wird, welche durch die Mitte der Strecke zwischen Bergkämmen (11) und Talsohlen (12) des Wellenprofils verläuft.

2. Filterelement (1) nach Anspruch 1, **dadurch gekennzeichnet, dass** die Täler (5) vom Innenraum (4) wegweisende Erhebungen (7) besitzen.

3. Filterelement (1) nach Anspruch 2, **dadurch gekennzeichnet, dass** die Erhebungen (7) unterhalb der Bergkämme (11) des Wellenprofils enden.

4. Filterelement (1) nach Anspruch 3, **dadurch gekennzeichnet, dass** die Höhe der Erhebungen (7) über der Talsohle (12) im Bereich zwischen 20 und 70% der Strecke zwischen dem Bergkamm (11) und der Talsohle (12) des Wellenprofils liegt.

5. Filterelement (1) nach einem der vorhergehenden Ansprüche, **dadurch gekennzeichnet, dass** die Täler (5) um 50 bis 400%, insbesondere um 100 bis 300% breiter als die Berge (6) des Wellenprofils sind.

6. Filterelement (1) nach einem der Ansprüche 2 bis 5, **dadurch gekennzeichnet, dass** sich die Erhebungen (7) ausschließlich im perforierten Bereich der Filterplatte (3) befinden.

7. Filterelement (1) nach einem der Ansprüche 2 bis 6, **dadurch gekennzeichnet, dass** die Erhebungen (7) einen runden oder länglichen Querschnitt aufweisen.

8. Filterelement (1) nach einem der Ansprüche 2 bis 6, **dadurch gekennzeichnet, dass** die Erhebungen (7) wellenförmig ausgebildet sind und die Wellenberge (8) der Erhebungen (7) vorzugsweise parallel zu den Bergen (6) des Wellenprofils der Filterplatte (3) verlaufen.

9. Filterelement (1) nach Anspruch 8, **dadurch gekennzeichnet, dass** zwischen zwei Bergen (6) des Wellenprofils höchstens zwei, vorzugsweise nur eine wellenförmige Erhebung (7,8) vorhanden ist.

10. Filterelement (1) nach Anspruch 8 oder 9, **dadurch gekennzeichnet, dass** sich die wellenförmige Erhebung (7,8) über das gesamte Wellenprofils der Filterplatte (3) erstreckt.

11. Filterelement (1) nach einem der vorhergehenden Ansprüche, **dadurch gekennzeichnet, dass** die Bergkämme (11) des Wellenprofils der Filterplatte (3) nicht linear verlaufen.

12. Filterelement (1) nach einem der Ansprüche 1 bis 10, **dadurch gekennzeichnet, dass** die Bergkämme (11) des Wellenprofils der Filterplatte (3) linear verlaufen.

13. Filterelement (1) nach einem der vorhergehenden Ansprüche, **dadurch gekennzeichnet, dass** der Verlauf des Wellenprofils einer Filterplatte (3) abschnittsweise variiert.

14. Filterelement (1) nach einem der vorhergehenden Ansprüche, **dadurch gekennzeichnet, dass** dieses kreissektorförmig ausgebildet und vorzugsweise auf einer, mit der Unterdruckquelle verbundenen Hohlwelle (9) befestigt ist, wobei mehrere Filterelemente (1) eine kreisförmige Filterscheibe (13) bilden.

15. Filterelement (1) nach einem der Ansprüche 2 bis 14, **dadurch gekennzeichnet, dass** zwei gegenüberliegende, den Innenraum (4) des Filterelementes (1) begrenzende Filterplatten (3) ein Wellenprofil mit Erhebungen (7) in den Tälern (5) besitzen.

16. Filterelement (1) nach Anspruch 15, **dadurch gekennzeichnet, dass** die Wellen des Wellenprofils zweier gegenüberliegender Filterplatten (3) des Filterelementes (1) zueinander geneigt verlaufen.

17. Filterelement (1) nach Anspruch 15, **dadurch gekennzeichnet, dass** die Wellen des Wellenprofils zweier gegenüberliegender Filterplatten (3) des Filterelementes (1) parallel zueinander verlaufen.

18. Filterelement (1) nach Anspruch 17, **dadurch gekennzeichnet, dass** die Berge (6) des Wellenprofils der Außenseite einer Filterplatte (3) jeweils den Bergen (6) des Wellenprofils der Außenseite der anderen Filterplatte (3) des Filterelementes (1) gegenüberliegen.

19. Filterelement (1) nach einem der Ansprüche 15 bis 18, **dadurch gekennzeichnet, dass** die gegenüberliegenden Filterplatten (3) eines Filterelementes (1) an den Enden formschlüssig miteinander verbunden sind.

## Claims

1. Filter element (1) of a rotating disc filter for separating liquids from a suspension (2), in particular a fibrous material suspension, the interior (4) of which, delimited by one or more perforated and profiled filter plates (3), is connected to a vacuum source, wherein at least one filter plate (3) has a wave profile, **characterized in that,** in the wave profile, the troughs (5) are wider than the peaks (6), wherein the width of the troughs (5) and peaks (6) is determined by the centre line (18) which runs through the centre of the section between the peak crests (11) and trough bottoms (12) of the wave profile.

2. Filter element (1) according to Claim 1, **characterized in that** the troughs (5) have elevations (7) pointing away from the interior (4).

3. Filter element (1) according to Claim 2, **characterized in that** the elevations (7) end underneath the peak crests (11) of the wave profile.

4. Filter element (1) according to Claim 3, **characterized in that** the height of the elevations (7) above the trough bottom (12) lies in the range between 20 and 70% of the section between the peak crest (11) and the trough bottom (12) of the wave profile.

5. Filter element (1) according to one of the preceding claims, **characterized in that** the troughs (5) are 50 to 400%, in particular 100 to 300%, wider than the peaks (6) of the wave profile.

6. Filter element (1) according to one of Claims 2 to 5, **characterized in that** the elevations (7) are located exclusively in the perforated area of the filter plate (3) .

7. Filter element (1) according to one of Claims 2 to 6, **characterized in that** the elevations (7) have a round or elongated cross section.

8. Filter element (1) according to one of Claims 2 to 6, **characterized in that** the elevations (7) are wave-shaped and the wave peaks (8) of the elevations (7) preferably run parallel to the peaks (6) of the wave profile of the filter plate (3).

9. Filter element (1) according to Claim 8, **characterized in that** there are at most two wave-shaped elevations (7, 8), preferably only one, between two peaks (6) of the wave profile.

10. Filter element (1) according to Claim 8 or 9, **characterized in that** the wave-shaped elevation (7, 8) extends over the entire wave profile of the filter plate (3) .

11. Filter element (1) according to one of the preceding claims, **characterized in that** the peak crests (11) of the wave profile of the filter plate (3) do not run linearly.

12. Filter element (1) according to one of Claims 1 to 10, **characterized in that** the peak crests (11) of the wave profile of the filter plate (3) run linearly.

13. Filter element (1) according to one of the preceding claims, **characterized in that** the course of the wave profile of a filter plate (3) varies section by section.

14. Filter element (1) according to one of the preceding claims, **characterized in that** it has the shape of a circular sector and is preferably fixed to a hollow shaft (9) connected to the vacuum source, wherein a plurality of filter elements (1) form a circular filter disc (13).

15. Filter element (1) according to one of Claims 2 to 14, **characterized in that** two opposite filter plates (3) delimiting the interior (4) of the filter element (1) have a wave profile with elevations (7) in the troughs (5) .

16. Filter element (1) according to Claim 15, **characterized in that** the waves of the wave profile of two opposite filter plates (3) of the filter element (1) run at an angle to each other.

17. Filter element (1) according to Claim 15, **characterized in that** the waves of the wave profile of two opposite filter plates (3) of the filter element (1) run parallel to each other.

18. Filter element (1) according to Claim 17, **characterized in that** the peaks (6) of the wave profile of the outer side of a filter plate (3) are each opposite the peaks (6) of the wave profile of the outer side of the other filter plate (3) of the filter element (1).

19. Filter element (1) according to one of Claims 15 to 18, **characterized in that** the opposite filter plates (3) of a filter element (1) are positively connected to each other at the ends.

## Revendications

1. Élément filtrant (1) d'un filtre à disques rotatif pour la séparation de liquides d'une suspension (2), en particulier d'une suspension de matière fibreuse, dont l'espace intérieur (4), délimité par une ou plusieurs plaques filtrantes perforées et profilées (3), est relié à une source de sous-pression, au moins une plaque filtrante (3) présentant un profil ondulé, **caractérisé en ce que**, dans le profil ondulé, les vallées (5) sont plus larges que les monts (6), la largeur des vallées (5) et des monts (6) étant déterminée par l'intermédiaire de la ligne médiane (18) qui passe à travers le milieu de la section entre les crêtes de monts (11) et les fonds de vallées (12) du profil ondulé.

2. Élément filtrant (1) selon la revendication 1, **caractérisé en ce que** les vallées (5) possèdent des élévations (7) opposées à l'espace intérieur (4).

3. Élément filtrant (1) selon la revendication 2, **caractérisé en ce que** les élévations (7) terminent en dessous des crêtes de monts (11) du profil ondulé.

4. Élément filtrant (1) selon la revendication 3, **caractérisé en ce que** la hauteur des élévations (7) au-dessus des fonds de vallées (12) se situe dans la plage comprise entre 20 et 70 % de la section entre la crête de mont (11) et le fond de vallée (12) du profil ondulé.

5. Élément filtrant (1) selon l'une quelconque des revendications précédentes, **caractérisé en ce que** les vallées (5) sont 50 à 400 %, en particulier 100 à 300 %, plus larges que les monts (6) du profil ondulé.

6. Élément filtrant (1) selon l'une quelconque des revendications 2 à 5, **caractérisé en ce que** les élévations (7) se trouvent exclusivement dans la zone perforée de la plaque filtrante (3).

7. Élément filtrant (1) selon l'une quelconque des revendications 2 à 6, **caractérisé en ce que** les élévations (7) présentent une section transversale ronde ou allongée.

8. Élément filtrant (1) selon l'une quelconque des revendications 2 à 6, **caractérisé en ce que** les élévations (7) sont configurées sous forme ondulée et les monts d'ondulation (8) des élévations (7) sont de préférence parallèles aux monts (6) du profil ondulé de la plaque filtrante (3).

9. Élément filtrant (1) selon la revendication 8, **caractérisé en ce qu'**au plus deux, de préférence uniquement une élévation sous forme ondulée (7, 8) est présente entre deux monts (6) du profil ondulé.

10. Élément filtrant (1) selon la revendication 8 ou 9, **caractérisé en ce que** l'élévation sous forme ondulée (7, 8) s'étend sur l'ensemble du profil ondulé de la plaque filtrante (3).

11. Élément filtrant (1) selon l'une quelconque des revendications précédentes, **caractérisé en ce que** les crêtes de monts (11) du profil ondulé de la plaque filtrante (3) sont non linéaires.

12. Élément filtrant (1) selon l'une quelconque des revendications 1 à 10, **caractérisé en ce que** les crêtes de monts (11) du profil ondulé de la plaque filtrante (3) sont linéaires.

13. Élément filtrant (1) selon l'une quelconque des revendications précédentes, **caractérisé en ce que** l'allure du profil ondulé d'une plaque filtrante (3) varie en sections.

14. Élément filtrant (1) selon l'une quelconque des revendications précédentes, **caractérisé en ce que** celui-ci est configuré en forme de secteur de cercle et de préférence fixé sur un arbre creux (9) relié à la source de sous-pression, plusieurs éléments filtrants (1) formant un disque filtrant sous forme circulaire (13) .

15. Élément filtrant (1) selon l'une quelconque des revendications 2 à 14, **caractérisé en ce que** deux plaques filtrantes (3) en vis-à-vis, délimitant l'espace intérieur (4) de l'élément filtrant (1) possèdent un profil ondulé muni d'élévations (7) dans les vallées (5).

16. Élément filtrant (1) selon la revendication 15, **caractérisé en ce que** les ondulations du profil ondulé de deux plaques filtrantes en vis-à-vis (3) de l'élément filtrant (1) sont inclinées l'une par rapport à l'autre.

17. Élément filtrant (1) selon la revendication 15, **caractérisé en ce que** les ondulations du profil ondulé de deux plaques filtrantes en vis-à-vis (3) de l'élément filtrant (1) sont parallèles les unes aux autres.

18. Élément filtrant (1) selon la revendication 17, **caractérisé en ce que** les monts (6) du profil ondulé du côté extérieur d'une plaque filtrante (3) sont respectivement en vis-à-vis des monts (6) du profil ondulé du côté extérieur de l'autre plaque filtrante (3) de l'élément filtrant (1).

19. Élément filtrant (1) selon l'une quelconque des revendications 15 à 18, **caractérisé en ce que** les plaques filtrantes en vis-à-vis (3) d'un élément filtrant (1) sont reliées les unes aux autres par accouplement de forme aux extrémités.
